# EUROPÄISCHE PATENTSCHRIFT

(11) **EP 1 733 156 B1**
(45) Veröffentlichungstag und Bekanntmachung des Hinweises auf die Patenterteilung: **10.03.2010**
(21) Anmeldenummer: 05716269.5
(22) Anmeldetag: 22.03.2005
(51) Int. Cl.: B60K 17/35, B60K 17/34, B60K 23/08

(54) **VERTEILERGETRIEBE**
POWER DIVIDER
BOITE DE TRANSFERT

(30) Priorität: 30.03.2004 DE 102004016642
(43) Veröffentlichungstag der Anmeldung: 20.12.2006
(73) Patentinhaber: Getrag Driveline Systems GmbH, 50735 Köln (DE)
(72) Erfinder: NETT, Hans-Peter, 53518 Adenau (DE); HOECK, Michael, 53819 Neunkirchen-Seelscheid (DE); HAUPT, Jan, 50933 Köln (DE)
(74) Vertreter: Steil, Christian
(86) Internationale Anmeldenummer: PCT/EP2005/003000
(87) Internationale Veröffentlichungsnummer: WO 2005/098278

(56) Entgegenhaltungen:
- WO-A-02/28678
- DE-A1- 3 721 628
- US-A- 5 167 293

## Beschreibung

Die vorliegende Erfindung betrifft ein Verteilergetriebe für ein Kraftfahrzeug mit einer ersten und einer zweiten angetriebenen Achse gemäß dem Oberbegriff des Anspruchs 1, wie es aus der DE 4 308 268 C1 und der DE 4 122 126 A1 bekannt ist. Derartige Kraftfahrzeuge (Allradfahrzeuge) haben in den letzten Jahren stark an Bedeutung gewonnen.

Die Vorteile von Allradfahrzeugen sind beispielhaft beschrieben in "Fahrzeuggetriebe - Grundlagen, Auswahl, Auslegung und Konstruktion", G. Lechner, H. Naunheimer, Springer Verlag, 1994, Seiten 116-118.

Von besonderer Bedeutung ist bei Allradfahrzeugen das Verteilergetriebe, das den Leistungsfluss zwischen der ersten und der zweiten angetriebenen Achse steuert.

Ein Eingangsglied des Verteilergetriebes ist dabei mit dem Ausgang einer Antriebseinheit verbindbar.

Eine solche Antriebseinheit eines Kraftfahrzeuges weist wenigstens einen Motor auf. Der Motor kann ein Verbrennungsmotor, ein Elektromotor, ein Hybridmotor oder ähnliches sein. Der Ausgang des Antriebsmotors ist in der Regel mit einem Getriebe verbunden. Das Getriebe kann ein Stufengetriebe, wie ein Handschaltgetriebe, ein Wandlerautomat-Getriebe, ein Doppelkupplungsgetriebe oder auch ein stufenloses Getriebe, wie ein CVT, ein Toroidgetriebe oder ähnliches sein.

Die Antriebseinheit kann als Frontantriebseinheit oder als Heckantriebseinheit ausgebildet sein.

Das Verteilergetriebe ist in der Regel in unmittelbarer räumlicher Zuordnung zu der Antriebseinheit eingebaut, bei einer Frontantriebseinheit also im Bereich der Vorderachse, bei einer Heckantriebseinheit im Bereich der Hinterachse. Dabei kann beispielsweise das Verteilergetriebe auch in ein Gehäuse des vorgeschalteten Getriebes integriert sein.

Bei den Verteilergetrieben unterscheidet man generell zwischen differentialgesteuerten Systemen, kupplungsgesteuerten Systemen und Mischformen aus diesen beiden Systemen. Dies ist ausführlich beschrieben in "Kraftfahrzeuggetriebe - Grundlagen, Auswahl, Auslegung und Konstruktion", a.a.O., Seiten 118-120.

Bei differentialgesteuerten Systemen erfolgt die Momentenverteilung auf die zwei angetriebenen Achsen durch ein Längsdifferential. Hierbei kann es sich um ein Kegelraddifferential oder ein Planetenraddifferential handeln. Dabei ist generell ein bestimmtes Verhältnis der Momentenverteilung vorgegeben, beispielsweise 50 % Vorderachse, 50 % Hinterachse.

Bei kupplungsgesteuerten Systemen wird permanent nur eine Achse angetrieben. Die zweite Achse wird nach Bedarf manuell oder automatisch zugeschaltet.

Bei den differentialgesteuerten Systemen ist es ferner möglich, das Differential vollständig oder geregelt zu sperren, beispielsweise durch eine parallelgeschaltete Klauenkupplung bzw. durch eine parallelgeschaltete regelbare Reibkupplung.

Ein bekanntes Verteilergetriebe der Firma Mitsubishi ist im Bereich der Vorderachse vorgesehen. Die Drehmomentverteilung auf die Achsen erfolgt über ein Längsdifferential in Form eines Kegelraddifferentials, das in dem Verteilergetriebe koaxial zu der Vorderachse angeordnet ist. Das Querdifferential (Vorderachsdifferential) ist in dem bekannten Verteilergetriebe ebenfalls koaxial zur Vorderachse angeordnet und ist neben einem Tellerrad vorgesehen, das mit einer Kardanwelle zum Antrieb der Hinterachse in Eingriff steht.

Das Drehmoment fließt dabei von einem Ausgang (final drive) eines Stufengetriebes der Antriebseinheit zunächst zu dem Längsdifferential und wird in einen festen Wert von 50 % : 50 % aufgeteilt. Ein Ausgangselement des Längsdifferentials ist über eine Hohlwelle mit dem Tellerrad verbunden. Das zweite Ausgangselement des Längsdifferentials ist über eine weitere Hohlwelle mit dem Eingangselement des Querdifferentials verbunden.

Ferner ist an einem axialen Ende des Verteilergetriebes eine Längssperre in Form einer regelbaren Reibkupplung vorgesehen, benachbart zu dem Tellerrad. Bei fehlender Traktion an einer der zwei angetriebenen Achsen wird diese Reibkupplung geschlossen, so dass das Antriebsdrehmoment zur Achse mit dem höheren Reibwert übertragen wird.

Die regelbare Reibkupplung ist als Lamellenkupplung ausgeführt, die beispielsweise von einer hydraulischen Kolben/Zylinderanordnung beaufschlagt wird. Ein Reibglied der Lamellenkupplung ist mit einem Tellerradgehäuse verbunden. Das andere Reibglied ist über eine Längsverzahnung mit dem Eingangselement des Querdifferentials verbunden und ist axial verschieblich hierzu gelagert. Das mit dem Eingangselement des Querdifferentials verbundene Reibglied stützt sich an einem Rillenkugellager ab, das an einem Gehäuse des Verteilergetriebes festgelegt ist.

Das Rillenkugellager muss demzufolge auf absolute Drehzahl dimensioniert werden.

Das Querdifferential kann als weitgehend herkömmliches Kegelraddifferential ausgeführt sein. Dies hat den Nachteil, dass das Rad mit dem niedrigsten Reibwert bestimmend für das maximal übertragbare Drehmoment an der Vorderachse ist.

Alternativ ist es auch bekannt, anstelle des - offenen - Kegelraddifferentials ein passives Torsen-Differential vorzusehen. Dies wirkt wie ein Selbstsperrdifferential. Die Verwendung einer derartigen passiven Quersperre hat dort Nachteile in Bezug auf das Eigenlenkverhalten des Fahrzeugs (Lenkstörmomente, Zur-Seite-Ziehen auf unterschiedlichen Reibwerten etc.).

Aus der DE 37 21 628 C2 ist ein Verteilergetriebe bekannt, bei dem ein Längs- und ein Querdifferential koaxial zu der Vorderachse eines Kraftfahrzeuges angeordnet sind. Das Querdifferential ist benachbart zu einem Zahnkranz angeordnet, der mit einem Abtriebszahnrad eines vorgeschalteten Stufengetriebes in Eingriff steht. Der Zahnkranz ist über eine äußere Hohlwelle mit dem Längsdifferential verbunden. Der eine Ausgang des Längsdifferentials ist mit einem benachbarten Tellerrad verbunden, das mit einer Kardanwelle zum Antrieb der Hinterräder in Eingriff steht. Der zweite Ausgang des Längsdifferentials ist über eine innere Hohlwelle mit dem Eingang des Querdifferentials verbunden. Eine Längssperre in Form einer Lamellenkupplung ist zwischen dem Eingang des Querdifferentials und einem Abschnitt des Zahnkranzes vorgesehen.

Ferner ist aus der WO 02/28678 A1 ein Achsantriebsblock mit Differentialsperre bekannt. Zwei Planetenradsätze zur Bildung eines Längs- und eines Querdifferentials sind über ein gemeinsames Hohlrad gekoppelt. Dessen Außenumfang tritt sperrend mit dem Innenumfang eines Differentialgehäuses in Eingriff.

Vor dem obigen Hintergrund ist es die Aufgabe der vorliegenden Erfindung, ein verbessertes Verteilergetriebe für ein Kraftfahrzeug anzugeben.

Diese Aufgabe wird gemäß Anspruch 1 durch ein Verteilergetriebe für ein Kraftfahrzeug mit einer ersten und einer zweiten angetriebenen Achse gelöst, mit einem Eingangsglied, das mit dem Ausgang einer Antriebseinheit verbindbar ist, einem Querdifferential für die erste angetriebene Achse und einem Ausgangsglied, das mit der zweiten angetriebenen Achse verbindbar ist, und mit einer Reibkupplung, die zwei Reibglieder aufweist, wobei eines der Reibglieder mit dem Ausgangsglied verbunden ist, wobei das andere Reibglied axial starr mit dem Eingangselement des Querdifferentials verbunden ist und wobei sich das Eingangselement des Querdifferentials in axialer Richtung an dem Ausgangsglied abstützt, und wobei die Reibkupplung von einem Kolben einer Kolben/Zylinderanordnung axial beaufschlagt wird.

Durch die Maßnahme, das eine Reibglied der Reibkupplung axial starr mit dem Eingangselement des Querdifferentials zu verbinden, werden die Reaktionskräfte beim Beaufschlagen der Reibkupplung in axialer Richtung in das Eingangselement des Querdifferentials eingeleitet.

Um diese Axialkräfte abzustützen, ist das Eingangselement des Querdifferentials (bei einem Kegelraddifferential in der Regel der Differentialkorb) axial an dem Ausgangsglied gelagert bzw. stützt sich daran ab.

Dies ist insbesondere dann auf vergleichsweise einfache Weise möglich, wenn das Ausgangsglied das Eingangselement des Querdifferentials auf einer oder auf beiden axialen Seiten umgibt, wie es beispielsweise der Fall ist, wenn die Reibkupplung und das Eingangsglied auf gegenüberliegenden Seiten des Querdifferentials angeordnet sind.

Dadurch, dass sich die Reibkupplung nicht mehr an dem Gehäuse abstützen muss, ist zudem Platz geschaffen für eine modulare Erweiterung des Verteilergetriebes.

Vorzugsweise ist koaxial zu der ersten angetriebenen Achse ein Raum für ein Längsdifferential vorgesehen, so dass alternativ
- ein Längsdifferential einbaubar ist, dessen Eingangselement mit dem Eingangsglied verbunden ist und das ausgangsseitig mit dem Eingangselement des Querdifferentials und mit dem Ausgangsglied verbunden ist, wobei die Reibkupplung als Längssperre dient,
   oder
- das Eingangsglied mittels eines den Längsdifferentialraum überbrückenden Verbindungsgliedes mit dem Eingangselement des Querdifferentials verbunden ist, wobei die Reibkupplung zum Zuschalten der zweiten angetriebenen Achse dient.

Das Verteilergetriebe gemäß Anspruch 2 ermöglicht somit die Realisierung unterschiedlicher Konzepte der Momentenverteilung auf der Grundlage einer einheitlichen Basiskonstruktion. Diese Basiskonstruktion ist entweder zur kupplungsgesteuerten Momentenverteilung ausgelegt, dann nämlich, wenn kein Längsdifferential eingebaut ist und die Reibkupplung zum Zuschalten der zweiten angetriebenen Achse dient ("Hang-on-Lösung"), oder in dem vorgesehenen Raum ist ein Längsdifferential eingebaut, so dass sich eine Momentenverteilung auf Vorder- und Hinterachse in einem festen Verhältnis ergibt.

Bevorzugt ist die erfindungsgemäße Reibkupplung eine (regelbare) Reibkupplung, wie z.B. eine Trockenreibkupplung. Besonders bevorzugt ist die Reibkupplung eine Nass-Lamellenkupplung. Aktive Reibkupplungen sind insbesondere wegen der besseren ABS-Verträglichkeit bevorzugt.

Von besonderem Vorteil ist es, wenn eine zweite Reibkupplung vorgesehen ist, die als Quersperre dient.

Durch Einsatz einer Reibkupplung lässt sich eine Sperrwirkung erzielen. Bei einer regelbaren Reibkupplung als Quersperre können die nachteiligen Einflüsse auf das Eigenlenkverhalten vermieden werden, wie sie bei passiven Quersperren auftreten. Dies gilt insbesondere dann, wenn die Achskinematik der zugeordneten angetriebenen Achse auf eine solche aktive Quersperre abgestimmt ist (z.B. kleiner Störkrafthebelarm). Insgesamt wird ein im Vergleich zu einem offenen Querdifferential wesentlich besseres Fahrverhalten erzielt. Die Traktion bei einer extremen Reibwertdifferenz zwischen rechts und links (µ-Split) wird erheblich gesteigert. Die Querdynamik kann positiv beeinflusst werden, indem auftretendes Lastwechselübersteuern und Leistungsuntersteuern kompensiert werden können.

Von besonderem Vorteil ist es dabei, wenn ein Reibglied der zweiten Reibkupplung mit dem Eingangselement des Querdifferentials verbunden ist und wenn ein anderes Reibglied der zweiten Reibkupplung mit einem der zwei Ausgangselemente des Querdifferentials verbunden ist, also mit einer der zwei Antriebswellen der ersten angetriebenen Achse.

Durch diese Maßnahme lässt sich eine Quersperre vergleichsweise einfach realisieren.

Von besonderem Vorzug ist es ferner, wenn die erste und die zweite Reibkupplung sich einen Steg teilen, an dem ein Reibglied der ersten Reibkupplung und ein Reibglied der zweiten Reibkupplung gelagert sind.

Bei diesem Aufbau lassen sich die erste und die zweite Reibkupplung in axialer Richtung besonders kurz realisieren.

Da bei dem ersten Aspekt der vorliegenden Erfindung sich die erste Reibkupplung nicht an dem Gehäuse abstützen muss, ist eine axiale Erweiterung um die zweite Reibkupplung konstruktiv vergleichsweise einfach zu realisieren.

Dabei ist es von besonderem Vorteil, wenn die an dem Steg gelagerten Reibglieder auf gegenüberliegenden axialen Enden des Stegs gelagert sind.

Obgleich auch eine Lagerung der Reibglieder auf einer axialen Seite des Stegs denkbar ist, ist die gegenüberliegende Anordnung aus Gründen einer kompakten radialen Bauform bevorzugt.

Gemäß einer weiteren insgesamt bevorzugten Ausführungsform ist die erste Reibkupplung bzw. sind die erste und die zweite Reibkupplung an einem axialen Ende des Verteilergetriebes angeordnet.

Hierdurch ist es ferner möglich, die Quersperre auf einfache konstruktive Weise als weiteres Modul des modularen Verteilergetriebes vorzusehen oder alternativ auch nicht vorzusehen.

Insgesamt ist es ebenfalls bevorzugt, wenn ein Gehäuse des Verteilergetriebes einen Axialdeckel ausbildet, der die erste Reibkupplung und gegebenenfalls die zweite Reibkupplung aufnimmt.

Bei dieser Form ergibt sich eine einfache Montage des Verteilergetriebes.

Dabei ist es von besonderem Vorteil, wenn in dem Axialdeckel ein Betätigungsglied zum Betätigen der zweiten Reibkupplung integriert ist.

Für den Fall, dass in dem Verteilergetriebe die zweite Reibkupplung als Quersperre vorgesehen ist, kann so auf einfache Weise das Betätigungsglied realisiert werden.

Von besonderem Vorteil ist es, wenn das Querdifferential und das gegebenenfalls vorgesehene Längsdifferential Kegelraddifferentiale sind.

Es versteht sich jedoch, dass die Differentiale auch als Planetenraddifferentiale ausgebildet sein können.

Auch können eines oder beide der Differentiale als passive Sperrdifferentiale ausgebildet sein, z.B. als Torsen-Differentiale.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Verteilergetrie- bes gemäß der vorliegenden Erfindung;
- Fig. 2: eine Schnittansicht durch ein Verteilergetriebe gemäß der vorliegenden Erfindung, dessen Funktionsweise dem Getriebeschema der Fig. 1 entspricht;
- Fig. 3: einen axialen Endabschnitt einer alternativen Ausfüh- rungsform des erfindungsgemäßen Verteilergetriebes; und
- Fig. 4: eine der Fig. 2 entsprechende Ansicht einer weiteren Ausführungsform des erfindungsgemäßen Verteiler- getriebes.

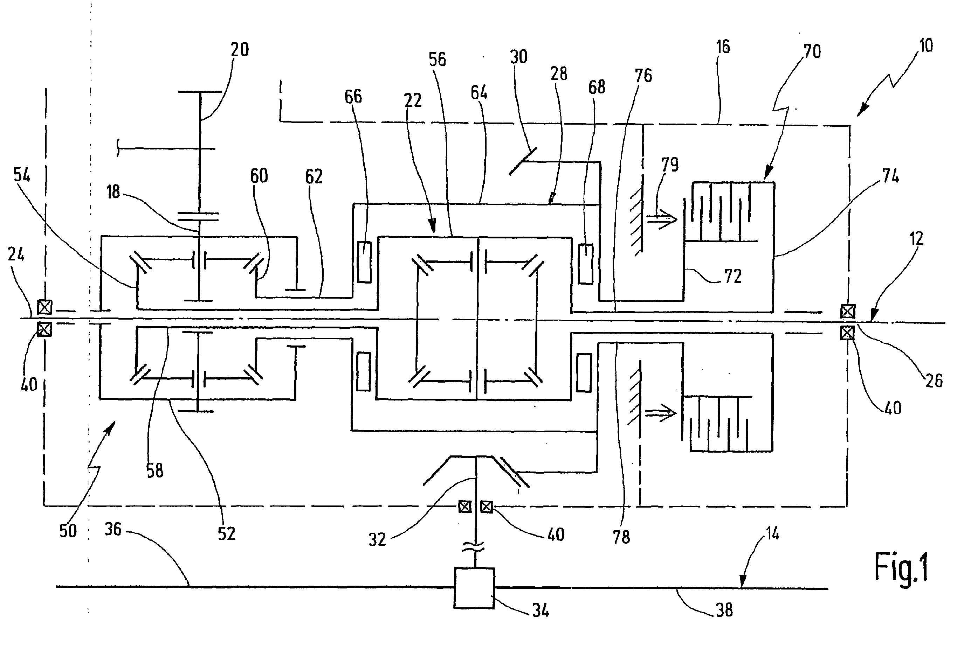

In Fig. 1 ist eine erste Ausführungsform des erfindungsgemäßen Verteilergetriebes generell mit 10 bezeichnet.

Das Verteilergetriebe 10 dient zur Verteilung der Antriebskraft bzw. des antreibenden Drehmomentes einer Antriebseinheit eines Kraftfahrzeuges auf zwei angetriebene Achsen, nämlich eine Vorderachse 12 und eine Hinterachse 14 des Kraftfahrzeuges.

Das Verteilergetriebe 10 weist ein schematisch dargestelltes Gehäuse 16 und ein Eingangsglied 18 auf.

Das Eingangsglied 18 in Form eines Antriebszahnrades steht mit einem Abtriebsrad 20 einer Antriebseinheit des Kraftfahrzeugs in Eingriff.

Bei dem Abtriebsrad 20 kann es sich beispielsweise um den "final drive" eines Stufengetriebes oder eines stufenlosen Getriebes der Antriebseinheit des Kraftfahrzeuges handeln.

Das Eingangsglied 18 ist koaxial zu der Vorderachse 12 vorgesehen.

In dem Gehäuse 16 des Verteilergetriebes 10 ist ferner ein Vorderachsdifferential 22 in Kegelradbauweise angeordnet. Die nicht näher bezeichneten Ausgangselemente des Vorderachsdifferentials 22 sind mit einer ersten Antriebswelle 24 bzw. einer zweiten Antriebswelle 26 der Vorderachse 12 verbunden.

Das Verteilergetriebe 10 weist ferner ein Ausgangsglied 28 auf. Das Ausgangsglied 28 beinhaltet ein Tellerrad 30, das mit einem Kegelrad einer Kardanwelle 32 in Eingriff steht. Die Kardanwelle 32 ist mit einem Eingangselement eines Hinterachsdifferentials 34 verbunden. Die Ausgangselemente des Hinterachsdifferentials 34 sind mit einer ersten Hinterachs-Antriebswelle 36 und einer zweiten Hinterachse-Antriebswelle 38 verbunden.

Bei 40 sind in schematischer Form Wellendichtungen dargestellt, bei denen die erste Vorderachs-Antriebswelle 24, die zweite Vorderachs-Antriebswelle 26 und die Kardanwelle 32 aus dem Gehäuse 16 des Verteilergetriebes 10 heraustreten.

Bei 50 ist ein Längsdifferential 50 in Kegelradbauweise gezeigt. Das Längsdifferential 50 verteilt das von der Antriebseinheit kommende Drehmoment in einem Verhältnis von 50 % : 50 % auf die Vorderachse 12 und die Hinterachse 14.

Das Längsdifferential 50 weist einen Differentialkorb 52 auf. Das Eingangsglied 18 in Form eines Stirnrades ist mit dem Differentialkorb 52 verbunden.

Das Längsdifferential 50 weist ein erstes Ausgangselement 54 auf, das über eine erste Hohlwelle 58 mit einem Differentialkorb 56 des Vorderachsdifferentials 22 verbunden ist. Die erste Hohlwelle 58 umgibt dabei die erste Vorderachs-Antriebswelle 24.

Das zweite Ausgangselement 60 des Längsdifferentials 50 ist über eine zweite Hohlwelle 62 mit dem Ausgangsglied 28 verbunden. Genauer gesagt ist die zweite Hohlwelle 62 mit einem Tellerradgehäuse 64 verbunden, das den Differentialkorb 56 des Vorderachsdifferentials 22 auf beiden Seiten axial einschließt. Das Tellerrad 30 ist an dem Tellerradgehäuse 64 an der Seite des Vorderachsdifferentials 22 vorgesehen, die dem Längsdifferential 50 gegenüberliegt.

Zwischen dem Differentialkorb 56 und dem Tellerradgehäuse 64 sind ein erstes Axiallager 66 und ein zweites Axiallager 68 angeordnet. Somit können Axialkräfte, die in den Differentialkorb 56 eingeleitet werden, sich an dem Tellerradgehäuse 64 abstützen.

Das Tellerradgehäuse 64 selbst kann über geeignete Lager (z.B. schräg angestellte Wälzlager) axial an dem Gehäuse 16 festgelegt sein.

Das Verteilergetriebe 10 weist ferner eine erste regelbare Reibkupplung 70 in Form einer Lamellenkupplung auf. Alternativ kann die Reibkupplung 70 jedoch auch durch ein anderes Reibkupplungskonzept realisiert sein, beispielsweise durch Kegelreibflächen.

Die Reibkupplung 70 weist ein erstes Reibglied 72 auf, das als Innenlamellenträger ausgebildet ist. Ferner weist die Reibkupplung 70 ein zweites Reibglied 74 auf, das als Außenlamellenträger ausgebildet ist.

Das zweite Reibglied 74 steht über eine dritte Hohlwelle 76 mit dem Differentialkorb 56 des Vorderachsdifferentials 22 in Verbindung. Das erste Reibglied 72 ist über eine vierte Hohlwelle 78 mit dem Tellerradgehäuse 64 verbunden. Die vierte Hohlwelle 78 umgibt die dritte Hohlwelle 76, so, wie die zweite Hohlwelle 62 die erste Hohlwelle 58 umgibt.

Bei 79 ist eine Kraft gezeigt, die mittels einer in Fig. 1 nicht näher dargestellten Kolben/Zylinderanordnung auf die Lamellenkupplung 70 ausgeübt werden kann und sich an einem schematisch dargestellten Abschnitt des Gehäuses 16 in axialer Richtung abstützt.

Das zweite Reibglied 74 ist axial starr mit dem Differentialkorb 56 verbunden. Demzufolge werden die Reaktionskräfte der Reibkupplung 70 über die dritte Hohlwelle 76 in den Differentialkorb 56 eingeleitet. Über die Axiallager 66, 68 können diese Kräfte in das Tellerradgehäuse 64 und hierüber in das Gehäuse 16 eingeleitet werden.

Das erste und das zweite Axiallager 66, 68 können zu diesem Zweck beispielsweise als Nadellager ausgebildet sein. Im eingangs beschriebenen Stand der Technik betreffend das Verteilergetriebe von Mitsubishi sind zwischen dem Differentialkorb des Vorderachsdifferentials und dem Tellerradgehäuse lediglich Gleitlager vorgesehen, die keine axialen Kräfte übertragen können.

Auch die Belastung des ersten und des zweiten Axiallagers 66, 68 ist vergleichsweise gering, da diese nur statisch belastet werden, wenn die Vorderachse 12 und die Hinterachse 14 mit gleicher Drehzahl laufen.

Das zweite Reibglied 74 stützt sich nicht an einem Lager ab, mittels dessen die zweite Vorderachs-Antriebswelle 26 austrittsseitig gelagert ist.

Die Reibkupplung 70 bildet, wie gesagt, eine Längssperre. Eine solche Längssperre ermöglicht es, das Drehmoment jeweils zu der Achse mit dem höheren Reibwert zu übertragen. Dabei ist eine aktive Längssperre, wie die geregelte Reibkupplung 70, gegenüber passiven Sperren (z.B. Viskosperren oder Torsen-Differentialen) vorteilhaft, da insbesondere die Kompatibilität für ABS und ESP gewährleistet ist. Denn eine passive Sperre kann nicht abgeschaltet werden, wohingegen die geregelte Reibkupplung 70 vollständig oder nahezu vollständig geöffnet werden kann. Dennoch kann z.B. aus Kostengründen anstelle der geregelten Lamellenkupplung 70 auch eine passive Viskosperre als Reibkupplung verwendet werden.

Das Kegelrad-Differential 22 für die Vorderachse 12 kann auch durch ein passives Sperrdifferential, wie z.B. ein Torsen-Differential, ersetzt werden.

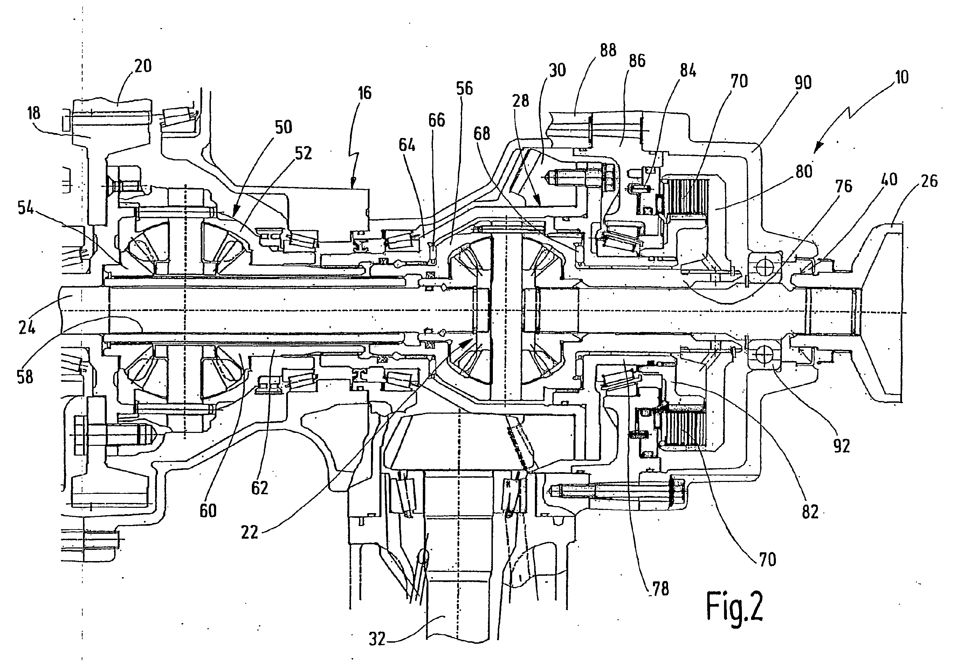

Fig. 2 zeigt eine Implementierung des in Fig. 1 schematisch dargestellten Verteilergetriebe-Konzeptes in einer axialen Schnittansicht.

Gleiche Bauteile, Baugruppen etc. wie in Fig. 1 sind mit gleichen Bezugsziffern gekennzeichnet. Die generelle Funktionsweise ist identisch zu der in Bezug auf das Getriebeschema der Fig. 1 beschriebenen Funktionsweise. Auf die Darstellung der Merkmale und der Funktionsweise des Verteilergetriebes der Fig. 10 wird daher ausdrücklich Bezug genommen, um Wiederholungen zu vermeiden. Im Folgenden wird lediglich auf einige konstruktive Details eingegangen, die in Fig. 1 nicht ohne Weiteres zu erkennen sind.

So ist an dem axialen Ende der dritten Hohlwelle 76 ein radialer erster Steg 80 starr befestigt, der das zweite Reibglied 74 bildet. Der Steg 80 ist ein Außenlamellenträger der ersten Reibkupplung 70.

Bei 82 ist der zugeordnete Innenlamellenträger dargestellt, der axial verschieblich an der vierten Hohlwelle 78 gelagert ist.

Die Reibkupplung 70 wird von einem Kolben einer Kolben/Zylinderanordnung 84 axial beaufschlagt. Die Kolben/Zylinderanordnung ist mittels einer übergeordneten Steuerung steuer- bzw. regelbar, wie es im Stand der Technik an sich bekannt ist.

Die Kolben/Zylinderanordnung 84 ist an einem Zylinderträger 86 festgelegt. Der Zylinderträger 86 ist zwischen einem Grundgehäuse 88 des Verteilergetriebe-Gehäuses 16 und einem Axialdeckel 90 des Verteilergetriebe-Gehäuses 16 festgelegt.

Es ist leicht zu erkennen, dass die Reibkupplung 70 auch weggelassen werden kann (beispielsweise aus Kostengründen). In diesem Fall wäre es einfach, anstelle des Zylinderträgers 86 einen Gehäusering zwischen Grundgehäuse 88 und Axialdeckel 90 einzusetzen, und die dritte und die vierte Hohlwelle 76, 78 hätten an ihren Enden keine Lamellenträger 80, 82. Alternativ kann auch ein verlängerter Axialdeckel 90 verwendet werden.

Sofern keine Reibkupplung 70 vorgesehen ist, ist das Längsdifferential 50 ein offenes Differential. Hierbei ist nachteilig, dass die Traktionskraft durch die Achse mit dem niedrigsten Reibwert bestimmt ist. Aus Kostengründen kann eine derartige Lösung dennoch vorteilhaft sein.

In Fig. 2 ist ferner ein Wellenlager 92 dargestellt, das die zweite Vorderachs-Antriebswelle 26 an dem Verteilergetriebe-Gehäuse 16 lagert. Das Wellenlager 92 ist als reines Radiallager ausgebildet. Es nimmt keine Kräfte von dem Steg 80 in axialer Richtung auf.

Das in Fig. 2 dargestellte Verteilergetriebe ist als modulares Verteilergetriebe ausgebildet. Wie bereits erwähnt, kann es mit oder ohne Längssperre in Form der ersten Reibkupplung 70 vorgesehen werden.

Die geregelte Lamellenkupplung 70 kann beispielsweise durch eine passive Viskosperre ersetzt werden.

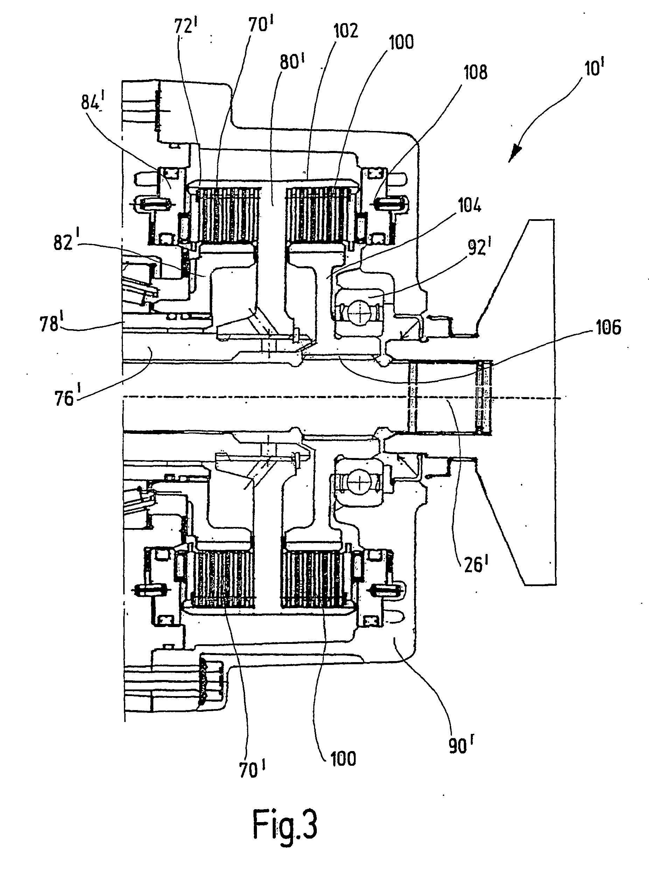

In Fig. 3 ist eine weitere alternative Ausführungsform des erfindungsgemäßen Verteilergetriebes generell mit 10' bezeichnet.

Das Verteilergetriebe 10' entspricht in seinem grundsätzlichen Aufbau und seiner grundsätzlichen Funktionsweise dem Verteilergetriebe 10 der Figuren 1 und 2. Auf deren Beschreibung wird somit vollinhaltlich Bezug genommen. Im Folgenden wird lediglich auf die Unterschiede eingegangen.

Das Verteilergetriebe 10' weist zusätzlich zu der Reibkupplung 70', die als Längssperre zwischen Vorderachse 12 und Hinterachse 14 ausgebildet ist, eine Quersperre in Form einer zweiten Reibkupplung 100 auf.

An der dritten Hohlwelle 76', die mit dem Differentialkorb 56 für das Vorderachsdifferential 22 verbunden ist, ist ein sich radial erstreckender Steg 80' starr festgelegt.

An dem Steg 80' ist, wie bei der Ausführungsform der Fig. 2, ein Außenlamellenträger angebracht, der sich hin zu dem Vorderachsdifferential 22 erstreckt. Der Außenlamellenträger der ersten Reibkupplung 70' bildet demzufolge ein erstes Reibglied 72'.

An der vierten Hohlwelle 78' ist ein Innenlamellenträger 82' für die erste Reibkupplung 70' gelagert, wie bei dem Verteilergetriebe 10 der Fig. 2.

Die Funktionsweise der Reibkupplung 70' und der generelle Aufbau entsprechen der Funktionsweise und dem Aufbau der Reibkupplung 70 der Fig. 2.

An den Steg 80' ist ein weiterer Außenlamellenträger 102 festgelegt. Der Außenlamellenträger 102 erstreckt sich in die entgegengesetzte Richtung, also hin zu dem axialen Ende des Verteilergetriebes 10' bzw. hin zu dem Axialdeckel 90'.

Ferner ist ein Innenlamellenträger 104 der zweiten Reibkupplung 100 drehfest mit der zweiten Vorderachs-Antriebswelle 26' verbunden, und zwar über ein Zahnprofil 106.

Die zweite Vorderachs-Antriebswelle 26' ist an dem Axialdeckel 90 über ein Wellenlager 92' gelagert, dessen Innenring mit einem axialen Vorsprung des Innenlamellenträgers 104 der zweiten Reibkupplung 100 verbunden ist.

In dem Axialdeckel 90' ist ferner eine zweite Kolben/Zylinderanordnung 108 integriert, die zur Beaufschlagung der zweiten Reibkupplung 100 dient.

Die zweite Reibkupplung 100 ist, wie gesagt, als Quersperre für das Vorderachsdifferential 22 ausgelegt. Sofern an einem der zwei angetriebenen Räder der Vorderachse 12 ein Schlupf auftritt, wird dies von einer übergeordneten Steuerung erfasst, und die zweite Reibkupplung 100 wird geschlossen. Hierdurch wird das Vorderachsdifferential 22 gesperrt, und es kann somit ein höheres Drehmoment zu dem Vorderrad mit dem höheren Reibwert übertragen werden.

Es versteht sich, dass die Reibkupplungen 70 bzw. 70', 100 vorzugsweise als geregelte Reibkupplungen ausgeführt sind, die nicht nur geöffnet und geschlossen sondern auch in einem Schlupfzustand betrieben werden können. Hierdurch ergibt sich eine höchstmögliche Variabilität der Momentenverteilung auf die vier angetriebenen Räder des Kraftfahrzeugs.

Man erkennt durch Vergleich der Figuren 2 und 3, dass die zusätzliche Quersperre in Form der zweiten Reibkupplung 100 auf einfache Weise durch modulare Erweiterung an dem Verteilergetriebe 10 der Fig. 2 vorgesehen werden kann. Hierzu ist lediglich der Steg 80 durch den Steg 80' auszutauschen, um eine "back to back"-Anordnung der zwei Reibkupplungen 70', 100 zu ermöglichen. Ferner ist an der zweiten Vorderachs-Antriebswelle 26' der Innenlamellenträger 104 festzulegen, und es ist ein geänderter Axialdeckel 90' vorzusehen, der nicht nur die erste Reibkupplung 70 sondern auch die zweite Reibkupplung 100 und zusätzlich hierzu die Kolben/Zylinderanordnung 108 zur Betätigung der zweiten Reibkupplung 100 aufnimmt. Ferner ist ein geändertes Wellenlager 92' vorzusehen, das auch eine Einleitung von Axialkräften in den Axialdeckel 90' ermöglicht.

Die Quersperre in Form der zweiten Reibkupplung 100 lässt sich demzufolge kostengünstig als zusätzliche Option bei dem Verteilergetriebe 10 der Figuren 1 und 2 realisieren.

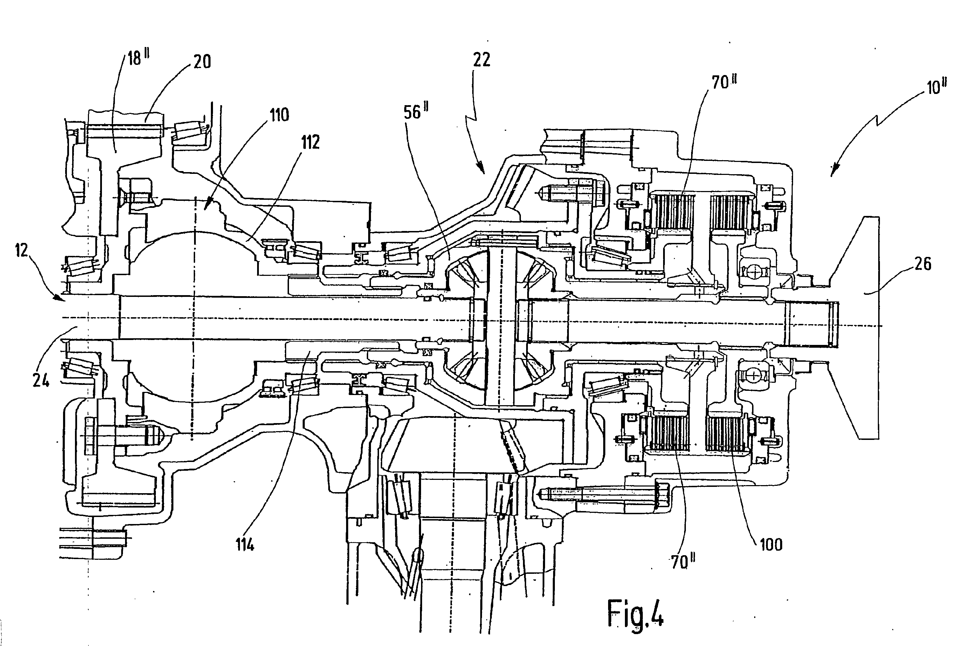

In Fig. 4 ist eine weitere Ausführungsform des erfindungsgemäßen Verteilergetriebes generell mit 10" bezeichnet.

Das Verteilergetriebe 10" basiert hinsichtlich Aufbau und Funktionsweise auf dem Verteilergetriebe 10 der Fig. 2. Auf deren Beschreibung wird somit vollinhaltlich Bezug genommen. Im Folgenden werden lediglich die Unterschiede erläutert.

Während das Verteilergetriebe 10 der Fig. 2 in Bezug auf die Drehmomentverteilung zwischen den Achsen ein differentialgesteuertes System ist, wird bei dem Verteilergetriebe 10" eine kupplungsgesteuerte Variante realisiert.

Bei dem Verteilergetriebe 10 der Fig. 2 ist ein Längsdifferential 50 zur Momentenverteilung im Verhältnis 50 % : 50 % vorgesehen.

Bei dem Verteilergetriebe 10" wird hingegen permanent nur die Vorderachse 12 angetrieben. Die Hinterachse 14 (in Fig. 4 nicht dargestellt) wird lediglich bei Bedarf (bei Schlupf an der Vorderachse) zugeschaltet, und zwar über die Reibkupplung 70".

Bei dem Verteilergetriebe 10" ist kein Längsdifferential 50 vorgesehen. Statt dessen ist ein Verbindungsglied 110 vorgesehen, das das Eingangsglied 18" des Verteilergetriebes 10" mit dem Eingangselement (dem Differentialkorb 56") des Vorderachsdifferentials 22 verbindet.

Das Verbindungsglied 110 weist ein Korbglied 112 auf, das den Differentialkorb 52 des Längsdifferentials 50 ersetzt und im Inneren hohl ist. Ferner weist das Verbindungsglied 110 ein Hohlwellenglied 114 auf, das das Korbglied 112 mit dem Differentialkorb 56" des Vorderachsdifferentials 22 verbindet.

Demzufolge wird bei dem Verteilergetriebe 10" die über das Eingangsglied 18" eingeleitete Antriebskraft zunächst unmittelbar auf das Vorderachsdifferential 22 geleitet. Das Vorderachsdifferential 22 verteilt die Antriebskraft auf die zwei Vorderachs-Antriebswellen 24, 26.

Für den Fall, dass an der Vorderachse 12 ein Schlupf auftritt, wird die Reibkupplung 70" nach der Art einer "Hang-on"-Lösung betätigt. In diesem Fall werden Vorderachse 12 und Hinterachse 14 gegeneinander gesperrt, so dass die Traktion durch die Achse mit dem höheren Reibwert bestimmt wird.

Die geregelte Reibkupplung 70" kann auch durch eine passive Reibkupplung ersetzt werden, beispielsweise durch eine Viskokupplung.

Das Verteilergetriebe 10" weist ferner eine Quersperre für die Vorderachse in Form der zweiten Reibkupplung 100 auf. Die Reibkupplung 100 kann jedoch bei dem Verteilergetriebe 10" auch weggelassen werden, ähnlich wie bei dem Verteilergetriebe 10 der Fig. 2. In diesem Fall wäre das Vorderachsdifferential 22 ein offenes Differential, und die Hinterachse würde nur bei Bedarf über die Reibkupplung 70" zugeschaltet.

Man erkennt in Fig. 4 ferner, dass sich das Verteilergetriebe 10" auf konstruktiv einfache Weise, basierend auf dem Grundkonzept des Verteilergetriebes 10 der Fig. 2 realisieren lässt.

Es versteht sich, dass das kupplungsgesteuerte Konzept der Momentenverteilung gemäß dem Verteilergetriebe 10" der differentialgesteuerten Momentenverteilung gemäß dem Verteilergetriebe 10 der Fig. 2 generell unterlegen ist. Aus Kostengründen kann eine solche Lösung nichtsdestotrotz relevant sein.

Auf Grund der modularen Bauweise des Verteilergetriebes kann dieses an den jeweiligen Einsatzzweck in optimaler und kostensparender Art und Weise angepasst werden.

Die Verteilergetriebe der Figuren 1 bis 4 sind jeweils koaxial zur Vorderachse des Kraftfahrzeuges angeordnet und sind in der Regel unmittelbar an ein Gehäuse einer Antriebseinheit (Gehäuse beispielsweise eines Stufengetriebes) angeflanscht, die ebenfalls vorne eingebaut ist.

Es versteht sich jedoch, dass die Verteilergetriebe der Figuren 1 bis 4 in gleicher Weise bei einer Hinterachse eingesetzt werden können, wobei dann die Antriebseinheit in der Regel ebenfalls im Heck des Fahrzeugs angeordnet ist. Dann ist die Achse 12 die Hinterachse und die Achse 14 die Vorderachse.

## Patentansprüche

1. Verteilergetriebe (10) für ein Kraftfahrzeug mit einer ersten und einer zweiten angetriebenen Achse (12, 14), mit einem Eingangsglied (18), das mit dem Ausgang (20) einer Antriebseinheit verbindbar ist, einem Querdifferential (22) für die erste angetriebene Achse (12) und einem Ausgangsglied (28), das mit der zweiten angetriebenen Achse (14) verbindbar ist, und einer Reibkupplung (70), die zwei Reibglieder (72, 74) aufweist, wobei eines (72) der Reibglieder (72, 74) mit dem Ausgangsglied (28) verbunden ist, wobei das andere Reibglied (74) axial starr mit einem Eingangselement (56) des Querdifferentials (22) verbunden ist und wobei sich das Eingangselement (56) des Querdifferentials (22) in axialer Richtung an dem Ausgangsglied (28) abstützt **dadurch gekennzeichnet, dass** die Reibkupplung (70) von einem Kolben einer Kolben/Zylinderanordnung (84) axial beaufschlagt wird.

2. Verteilergetriebe nach Anspruch 1, **dadurch gekennzeichnet, dass** koaxial zu der ersten angetriebenen Achse (12) ein Raum für ein Längsdifferential (50) vorgesehen ist, so dass alternativ
- ein Längsdifferential (50) einbaubar ist, dessen Eingangselement (52) mit dem Eingangsglied (18) verbunden ist und das ausgangsseitig mit dem Eingangselement (56) des Querdifferentials (22) und mit dem Ausgangsglied (28) verbunden ist, wobei die Reibkupplung (70) als Längssperre dient,
oder
- das Eingangsglied (18") mittels eines den Längsdifferentialraum überbrückenden Verbindungsgliedes (110) mit dem Eingangselement (56") des Querdifferentials (22) verbunden ist, wobei die Reibkupplung (70") zum Zuschalten der zweiten angetriebenen Achse (14) dient.

3. Verteilergetriebe nach Anspruch 1 oder 2, mit einer zweiten Reibkupplung (100), die als Quersperre dient.

4. Verteilergetriebe nach Anspruch 3, wobei ein Reibglied (102) der zweiten Reibkupplung (100) mit dem Eingangselement (56) des Querdifferentials (22) verbunden ist und wobei ein anderes Reibglied (104) der zweiten Reibkupplung (100) mit einem (26') der zwei Ausgangselemente (24, 26') des Querdifferentials (22) verbunden ist.

5. Verteilergetriebe nach Anspruch 3 oder 4, wobei die erste und die zweite Reibkupplung (70', 100) sich einen Steg (80') teilen, an dem ein Reibglied (72') der ersten Reibkupplung (70') und ein Reibglied (102) der zweiten Reibkupplung (100) gelagert sind.

6. Verteilergetriebe nach Anspruch 5, wobei die an dem Steg (80') gelagerten Reibglieder (72', 102) auf gegenüberliegenden axialen Seiten des Stegs (80') gelagert sind.

7. Verteilergetriebe nach einem der Ansprüche 1 bis 6, wobei die erste Reibkupplung (70) und ggf. die zweite Reibkupplung (100) an einem axialen Ende des Verteilergetriebes (10) angeordnet ist bzw. sind.

8. Verteilergetriebe nach einem der Ansprüche 1 bis 7, wobei ein Gehäuse (16) des Verteilergetriebes (10) einen Axialdeckel (90; 90') aufweist, der die erste Reibkupplung (70) und ggf. die zweite Reibkupplung (100) aufnimmt.

9. Verteilergetriebe nach Anspruch 8, wobei in dem Axialdeckel (90') ein Betätigungsglied (108) zum Betätigen der zweiten Reibkupplung (100) integriert ist.

10. Verteilergetriebe nach einem der Ansprüche 1 bis 9, wobei das Querdifferential (22) ein Kegelraddifferential ist.

11. Verteilergetriebe nach einem der Ansprüche 2 bis 10, wobei das Längsdifferential (70) ein Kegelraddifferential ist.

12. Verteilergetriebe nach einem der Ansprüche 2 bis 11, wobei die Kolben/Zylinderanordnung (84) an einem Zylinderträger (86) festgelegt ist, der zwischen einem Grundgehäuse (88) des Verteilergetriebe-Gehäuses (16) und einem Axialdeckel (90) des Verteilergetriebe Gehäuses (16) festgelegt ist.

## Claims

1. A power divider (10) for a motor vehicle with a first and a second driven axle (12, 14), with an input member (18) which is connectable to the output (20) of a drive unit, with a transverse differential (22) for the first driven axle (12) and an output member (28) which is connectable to the second driven axle (14), and with a friction clutch (70) which has two friction members (72, 74), one (72) of the friction members (72, 74) being connected to the output member (28), the other friction member (74) being connected axially rigidly to an input element (56) of the transverse differential (22), and the input element (56) of the transverse differential (22) being supported in the axial direction on the output member (28), **characterized in that** the friction clutch (70) is acted upon axially by a piston of a piston/cylinder arrangement (84).

2. The power divider of claim 1, **characterized in that** a space for a longitudinal differential (50) is provided coaxially with respect to the first driven axle (12), so that, alternatively,
- a longitudinal differential (50) can be installed, the input element (52) of which is connected to the input member (18) and which is connected on the output side to the input element (56) of the transverse differential (22) and to the output member (28), the friction clutch (70) serving as a longitudinal lock,
or
- the input member (18") is connected to the input element (56") of the transverse differential (22) by means of a connecting member (110) bridging the longitudinal differential space, the friction clutch (70") serving for cutting in the second driven axle (14).

3. The power divider as claimed in claim 1 or 2, with a second friction clutch (100) which serves as a transverse lock.

4. The power divider as claimed in claim 3, wherein one friction member (102) of the second friction clutch (100) is connected to the input element (56) of the transverse differential (22), and another friction member (104) of the second friction clutch (100) being connected to one (26') of the two output elements (24, 26') of the transverse differential (22).

5. The power divider as claimed in claim 3 or 4, wherein the first and the second friction clutch (70', 100) are sharing a web (80') on which a friction member (72') of the first friction clutch (70') and a friction member (102) of the second friction clutch (100) are mounted.

6. The power divider as claimed in claim 5, wherein the friction members (72', 102) mounted on the web (80') are mounted on opposite axial sides of the web (80').

7. The power divider as claimed in any of claims 1 to 6, wherein the first friction clutch (70) and, if appropriate, the second friction clutch (100) is/are arranged at one axial end of the power divider (10).

8. The power divider as claimed in any of claims 1 to 7, wherein a casing (16) of the power divider (10) having an axial cover (90; 90') which receives the first friction clutch (70) and, if appropriate, the second friction clutch (100).

9. The power divider as claimed in claim 8, wherein an actuating member (108) for actuating the second friction clutch (100) is integrated in the axial cover (90').

10. The power divider as claimed in any of claims 1 to 9, wherein the transverse differential (22) is a bevel wheel differential.

11. The power divider as claimed in any of claims 2 to 10, wherein the longitudinal differential (50) is a bevel wheel differential.

12. The power divider as claimed in any of claims 2 to 11, wherein the piston/cylinder arrangement (84) is secured to a cylinder carrier (86) which is secured between a basic casing (88) of the power divider casing (16) and an axial cover (90) of the power divider casing (16).

## Revendications

1. Boîte de transfert (10) pour un véhicule automobile pourvu d'un premier essieu moteur (12) et d'un deuxième essieu moteur (14), comprenant un organe d'entrée (18) qui peut être relié à la sortie (20) d'une unité d'entraînement, un différentiel transversal (22) pour le premier essieu moteur (12), un organe de sortie (28) qui peut être relié au deuxième essieu moteur (14), et un embrayage à friction (70) qui présente deux organes de friction (72, 74), sachant qu'un (72) des organes de friction (72, 74) est relié à l'organe de sortie (28), sachant que l'autre organe de friction (74) est relié de façon axialement fixe à un élément d'entrée (56) du différentiel transversal (22), et sachant que l'élément d'entrée (56) du différentiel transversal (22) s'appuie en direction axiale sur l'organe de sortie (28), **caractérisée en ce que** l'embrayage à friction (70) est sollicité axialement par un piston d'un ensemble piston-cylindre (84).

2. Boîte de transfert selon la revendication 1, **caractérisée en ce qu'**un espace pour un différentiel longitudinal (50) est prévu coaxialement au premier essieu moteur (12), de sorte que, alternativement
- un différentiel longitudinal (50) peut être installé, dont l'élément d'entrée (52) est relié à l'organe d'entrée (18) et qui est relié du côté de sortie à l'élément d'entrée (56) du différentiel transversal (22) et à l'organe de sortie (28), sachant que l'embrayage à friction (70) sert de dispositif de blocage longitudinal,
ou
- l'organe d'entrée (18") est relié à l'élément d'entrée (56") du différentiel transversal (22) et par l'intermédiaire d'un organe de liaison (110) franchissant l'espace de différentiel longitudinal, sachant que l'embrayage à friction (70") sert à activer le deuxième essieu moteur (14).

3. Boîte de transfert selon la revendication 1 ou 2, avec un deuxième embrayage à friction (100) qui sert de dispositif de blocage transversal.

4. Boîte de transfert selon la revendication 3, sachant qu'un organe de friction (102) du deuxième embrayage à friction (100) est relié à l'élément d'entrée (56) du différentiel transversal (22), et sachant qu'un autre organe de friction (104) du deuxième embrayage à friction (100) est relié à l'un (26') des deux éléments de sortie (24, 26') du différentiel transversal (22).

5. Boîte de transfert selon la revendication 3 ou 4, sachant que le premier et le deuxième embrayages à friction (70', 100) se partagent une entretoise (80') sur laquelle sont montés un organe de friction (72') du premier embrayage à friction (70') et un organe de friction (102) du deuxième embrayage à friction (100).

6. Boîte de transfert selon la revendication 5, sachant que les organes de friction (72', 102) montés sur l'entretoise (80') sont montés sur des côtés axialement opposés de l'entretoise (80').

7. Boîte de transfert selon l'une des revendications 1 à 6, sachant que le premier embrayage à friction (70) et le cas échéant le deuxième embrayage à friction (100) est ou sont disposés à une extrémité axiale de la boîte de transfert (10).

8. Boîte de transfert selon l'une des revendications 1 à 7, sachant qu'un carter (16) de la boîte de transfert (10) présente un couvercle axial (90 ; 90') qui reçoit le premier embrayage à friction (70) et le cas échant le deuxième embrayage à friction (100).

9. Boîte de transfert selon la revendication 8, sachant qu'un organe d'actionnement (108) destiné à actionner le deuxième embrayage à friction (100) est intégré dans le couvercle axial (90').

10. Boîte de transfert selon l'une des revendications 1 à 9, sachant que le différentiel transversal (22) est un différentiel conique.

11. Boîte de transfert selon l'une des revendications 2 à 10, sachant que le différentiel longitudinal (50) est un différentiel conique.

12. Boîte de transfert selon l'une des revendications 2 à 11, sachant que l'ensemble piston-cylindre (84) est fixé sur un porte-cylindre (86) qui est fixé entre un carter de base (88) du carter de boîte de transfert (16) et un couvercle axial (90) du carter de boîte de transfert (16).
